# EUROPEAN PATENT SPECIFICATION

(11) **EP 2 796 852 B1**
(45) Date of publication and mention of the grant of the patent: **27.07.2016**
(21) Application number: 14160573.3
(22) Date of filing: 18.03.2014
(51) Int. Cl.: G01N 9/26, G01L 19/04, G01M 3/02, H01H 33/56

(54) **Temperature-compensated fluid density sensor**
Temperaturkompensierter Dichtesensor für Fluide
Capteur de densité de fluides compensé en température

(30) Priority: 24.04.2013 IT BG20130011
(43) Date of publication of application: 29.10.2014
(73) Proprietor: Electronsystem MD S.r.l., 24061 Albana Sant'Alessandro (BG) (IT)
(72) Inventor: Ciboldi, Pietro, 24128 BERGAMO (IT)
(74) Representative: Gatti, Enrico

(56) References cited:
- DE-U1- 9 106 589
- US-A- 4 214 474
- US-A- 5 161 415
- US-A- 5 188 728

## Description

The present invention relates to a fluid density sensor, in particular for fluids in airtight and constant volume containers.

As known, there are technological situations wherein gases must have a certain density state to achieve specific physical properties. An example thereof is constituted by medium and high voltage electrical switches; said switches must in fact be immersed in a gas, sulfur hexafluoride, set at a predefined pressure (in a range from 0 to 10 bar) to cause the extinguishing of the electric arc in an ideal way.

In said situations it is vital to check that the gas is always present at the desired density.

In order to verify this one refers to the relationship between pressure and temperature, whereas the volume of the container (switch case) is constant. Assuming constant temperature as well, in fact, at each pressure reduction corresponds a gas density reduction.

The temperature can vary, however, for a plurality of reasons, so it becomes necessary to distinguish the pressure variations thus resulting, to give the correct interpretation or meaning.

If there is in fact a slow temperature increase which creates an increase of the gas pressure, said pressure increase is not an indicator of density increase.

Nor a pressure constancy of the gas is an indicator of a density constancy if it takes place as a result of a temperature increase.

A density sensor of this type is described in the patent IT 1271607 in the name of the Applicant.

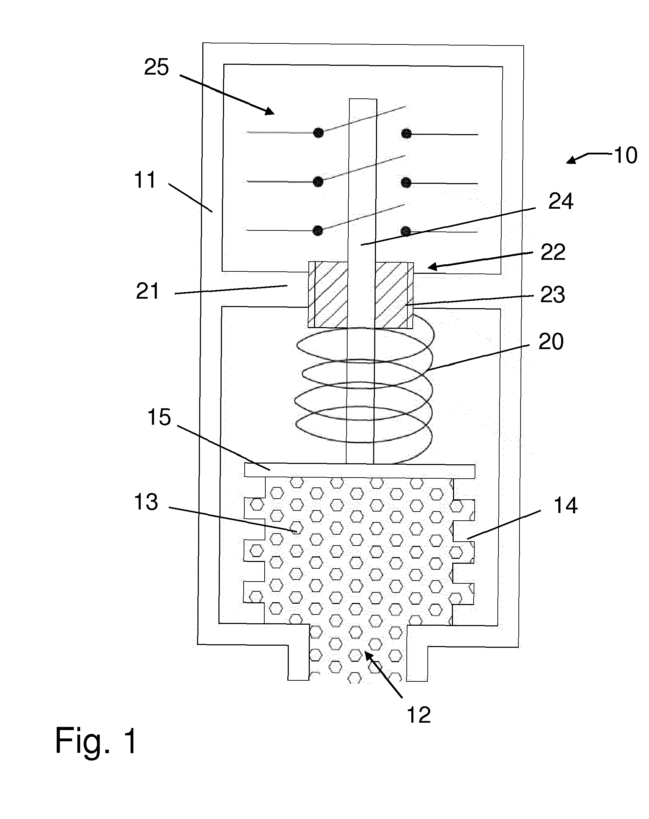

The document DE 91 06 589 discloses in figure 1 a fluid density sensor, which compensates temperature fluctuations with a bimetal.

The document US 5 161 415 discloses a pressure sensor measuring pressure with compensation for temperature variations. It employs a helical spring made from shape memory alloy. This spring increases the capacity of the variable chamber by moving a ring.

The document US 5 188 728 discloses a temperature compensation for measuring differential pressure across a fluid filter. The embodiment shows a piston on which a shape memory alloy spring acts.

Purpose of the present invention is to provide a fluid density sensor which is particularly simple and reliable.

According to the present invention, these and further objects are achieved by a fluid density sensor according to claim 1.

Further characteristics of the invention are described in the dependent claims.

The advantages of this solution compared to the solutions of the prior art are various.

Savings in overall dimensions and cost are obtained with respect to the solution with reference volume. There is a better insensitivity to mechanical shock with respect to the bimetallic solutions and the elimination of the risk of loss of the reference volume, for solutions that use it.

The characteristics and advantages of the present invention will become apparent from the following detailed description of an embodiment thereof, that is illustrated by way of non-limiting example in the accompanying drawings, wherein:
Figure 1 schematically shows a density sensor, according to the present invention.

Referring to the attached figures, a density sensor 10, according to the present invention, is enclosed in a container 11 having a bottom hole 12 which allows communication with the inside of the airtight constant volume container (not shown) of which the density of the fluid 13 contained therein needs to be controlled.

The hole 12 connects the airtight container with a variable volume chamber 14.

The chamber 14 is airtight sealed.

The variability of the volume is due to the fact that it is filled with the fluid present in the underlying airtight container, and by the fact that it has a deformable structure; thus it can therefore vary its volume at each variation of pressure that is generated in its inside.

This chamber is metallic and cylindrical with the outer surface circumferentially corrugated, so that variations in pressure in the inside thereof create elongations or shortenings in the axial direction.

The chamber 14 is upperly closed and in contact with a plate 15.

On the plate 15 rests one end of an intelligent spring 20. The other end of the spring 20 is in abutment with a partition (wall) 21 of the container 11. The partition 21 comprises a central hole 22, wherein an adjustment screw 23, perforated inside is arranged.

The intelligent spring 20, of predetermined length, is constituted by a memory shape alloy (LMF) as NiTi or other similar alloys.

The spring 20 has the function of an actuator and force depends on the temperature. In particular, the force, function of temperature, follows the control needs of a fluid at a given density in a sealed container.

On the plate 15 rests also an actuating rod 24 which passes into the hole 22 (and into the screw 23) of the partition 21 and actuates the micro switches 25, arranged above the partition 21. The micro switches 25 may be more than one, as they can have different intervention thresholds.

The activation of the micro switches 25 has been represented in a schematic way by the presence of the rod 24, but it is known to one skilled in the art to use different rods which activate different micro switches.

The shape memory spring 20 is adapted to oppose a force such that, in a given temperature range, the bellows chamber 14 and spring 20 system is insensitive to pressure variations which are caused by temperature and not density variations. In contrast, variations of the gas pressure within the bellows chamber 14 in communication with the gas under control, which are caused by variations in the density of the gas itself, result in a shift in the bellows chamber 14 and spring 20 system which, actuates the micro switch 25, providing an indication about the actual density of the gas. The length of the spring 20 is adjusted by means of the screw 23, in the test step of the device, so that it enters into action at the desired conditions.

The operation of the device according to the invention is apparent from that described and illustrated and, in particular, is substantially the following.

For example, as the temperature increases the volume of the gas increases and the chamber 14 expands. In the absence of the spring 20, the rod 24 would actuate micro switches 25 and would indicate a change in density.

The presence of the shape memory spring 20 opposes the expansion of the chamber 14 in a variable manner at the varying of the temperature. That is, when the temperature increases, while keeping the volume constant, the spring as well as opposing the chamber expansion, and not allowing the rod to move so as not to activate the micro switches, as all the springs do, opposes even more with respect to the temperature value.

The result is a fluid density sensor in an airtight constant volume container of simple construction and with a limited number of components.

## Claims

1. A fluid density sensor (10) for an airtight constant volume container; said sensor comprising: a body (11); a variable volume chamber (14), upper closed by a plate (15); said variable volume chamber (14) being in communication with said airtight constant volume container; at least one switch (25), fixed to said body (11), actuated by a rod (24); said rod (24) being fixed to said plate (15); **characterized in that** said sensor (10) comprises a shape memory spring (20), of adjustable length, fixed on one side to a fixed point (21) of said body (11) and on the other side to said plate (15); wherein said body (11) contains said variable volume chamber (14), said shape memory spring (20), said rod (24) and said at least one switch (25).

2. The sensor (10) according to claim 1 **characterized in that** said chamber (14) has a cylindrical shape and its outer surface is circumferentially corrugated.

3. The sensor (10) according to claim 1 **characterized in that** said chamber (14) is airtight sealed.

4. The sensor (10) according to claim 1 **characterized by** comprising more switches (25) operable at different pressure variation thresholds.

5. The sensor (10) according to claim 1 **characterized in that** said body (11) comprises a partition (21) having a hole (22); said spring (20) being fixed to said partition (21) on the one side and on the other side to said variable volume chamber (14).

6. The sensor (10) according to claim 5 **characterized in that** said rod (24) passes through said hole (22) of said partition (21) and contacts said at least one switch (25).

7. The sensor (10) according to claim 1 **characterized in that** said shape memory spring (20) is fixed to said fixed point (21) of said body (11) by means of a screw (23); wherein by turning said screw (23) the length of said spring (20) is adjusted.

## Patentansprüche

1. Fluiddichtesensor (10) für einen luftdichten Behälter mit konstantem Volumen, wobei der Sensor aufweist: einen Körper (11), eine Kammer (14) mit variablem Volumen, die oben durch eine Platte (15) geschlossen ist, wobei die Kammer (14) mit variablem Volumen in Kommunikation mit dem luftdichten Behälter mit konstantem Volumen steht, wenigstens einem Schalter (25), der an dem Körper (11) angebracht ist und durch eine Stange (24) betätigt wird, wobei die Stange (24) an der Platte (15) befestigt ist, **dadurch gekennzeichnet, dass** der Sensor (10) eine Formgedächtnisfeder (20) von einstellbarer Länge aufweist, die an einer Seite an einem festen Punkt (21) des Körpers (11) angebracht ist und an der anderen Seite mit der Platte (15) verbunden ist, wobei der Körper (11) die Kammer (14) mit variablem Volumen, die Formgedächtnisfeder (20), die Stange (24) und den wenigstens einen Schalter (25) enthält.

2. Sensor (10) nach Anspruch 1, **dadurch gekennzeichnet, dass** die Kammer (14) Zylinderform hat und ihre äußere Oberfläche mit umlaufenden Wellen versehen ist.

3. Sensor (10) nach Anspruch 1, **dadurch gekennzeichnet, dass** die Kammer (14) luftdicht abgedichtet ist.

4. Sensor (10) nach Anspruch 1, **dadurch gekennzeichnet, dass** der Sensor mehrere Schalter (25) aufweist, die bei verschiedenen Druckvariationsschwellen betreibbar sind.

5. Sensor (10) nach Anspruch 1, **dadurch gekennzeichnet, dass** der Körper (11) eine Unterteilung (21) mit einem Loch (22) aufweist, wobei die Feder (20) an ihrer einen Seite mit der Unterteilung (21) und an ihrer anderen Seite mit der Kammer (14) mit variablem Volumen verbunden ist.

6. Sensor (10) nach Anspruch 5, **dadurch gekennzeichnet, dass** die Stange (24) durch das Loch (22) der Unterteilung (21) verläuft und in Kontakt mit dem wenigstens einen Schalter (25) ist.

7. Sensor (10) nach Anspruch 1, **dadurch gekennzeichnet, dass** die Formgedächtnisfeder (20) durch eine Schraube (23) an dem festen Punkt (21) des Gehäuses (11) befestigt ist, wobei durch Drehen der Schraube (23) die Länge der Feder (20) eingestellt wird.

## Revendications

1. Capteur de densité de fluide (10) pour un contenant hermétique à volume constant ; ledit capteur comprenant : un corps (11) ; une chambre à volume variable (14), dont la partie supérieure est fermée par une plaque (15) ; ladite chambre à volume variable (14) étant en communication avec ledit contenant hermétique à volume variable ; au moins un commutateur (25), fixé audit corps (11), actionné par une tige (24) ; ladite tige (24) étant fixée à ladite plaque (15) ; **caractérisé en ce que** ledit capteur (10) comprend un ressort à mémoire de forme (20), de longueur réglable, fixé d'un côté à un point fixe (21) dudit corps (11) et de l'autre côté à ladite plaque (15) ; dans lequel ledit corps (11) contient ladite chambre à volume variable (14), ledit ressort à mémoire de forme (20), ladite tige (24) et au moins un commutateur (25).

2. Capteur (10) selon la revendication 1 **caractérisé en ce que** ladite chambre (14) présente une forme cylindrique et sa surface externe est ondulée de façon circonférentielle.

3. Capteur (10) selon la revendication 1 **caractérisé en ce que** ladite chambre (14) est hermétique.

4. Capteur (10) selon la revendication 1 **caractérisé en ce qu'**il comprend davantage de commutateurs (25) pouvant être actionnés à des seuils de variation de pression différents.

5. Capteur (10) selon la revendication 1 **caractérisé en ce que** ledit corps (11) comprend une cloison (21) présentant un trou (22) ; ledit ressort (20) étant fixé à ladite cloison (21) d'un côté et à ladite chambre à volume variable (14) de l'autre côté.

6. Capteur (10) selon la revendication 5 **caractérisé en ce que** ladite tige (24) traverse ledit trou (22) de ladite cloison (21) et entre en contact avec le(s)dit(s) commutateur(s) (25).

7. Capteur (10) selon la revendication 1 **caractérisé en ce que** ledit ressort à mémoire de forme (20) est fixé audit point fixe (21) dudit corps (11) au moyen d'une vis (23) ; dans lequel la longueur dudit ressort (20) est réglée en tournant ladite vis (23).
